# EUROPEAN PATENT SPECIFICATION

(11) **EP 2 847 517 B1**
(45) Date of publication and mention of the grant of the patent: **28.04.2021**
(21) Application number: 12721405.4
(22) Date of filing: 11.05.2012
(51) Int. Cl.: F24D 3/14, F24F 1/0007, F24F 1/0035, F24F 1/0053, F28D 1/02, F28D 21/00, F28F 9/22, F24F 1/0059, F28F 9/02

(54) **FIXTURE FOR AIR SUPPLY TO A ROOM WITH AIR TEMPERATURE TREATMENT**
VORRICHTUNG ZUR LUFTZUFUHR UND ZUR THERMISCHEN BEHANDLUNG DER LUFT
ENTRÉE D'AIR DE VENTILATION AVEC TRAITEMENT THERMIQUE DE L'AIR

(43) Date of publication of application: 18.03.2015
(73) Proprietor: Arkitektfirmaet Bo Christensen ApS, 6900 Skjern (DK)
(72) Inventor: CHRISTENSEN, Bo Asbjørn, DK-6950 Ringkøbing (DK)
(74) Representative: Zacco Denmark A/S
(86) International application number: PCT/DK2012/050163
(87) International publication number: WO 2014/000740

(56) References cited:
- EP-A1- 1 617 152
- EP-A1- 1 965 143
- EP-A2- 0 715 129
- DE-A1- 2 936 855
- DE-A1- 19 855 497

## Description

The present invention relates to an air injection fixture with a built-in heat convector.

### Background of the invention

All new low-energy houses are so tight that it is necessary to perform a controlled air exchange with a ventilation system.

Typically, the air injection fixtures will be placed in connection with window sections which, despite the use of windows with low U-values, are still the least insulating parts of the building envelope. This counteracts the entrance and not least the downfall of cold air, especially for very large and tall window sections.

Low-energy houses are often equipped with underfloor heating, which may be set at a lower temperature than radiators corresponding very well with, for instance, the operating temperatures of an earth heat system.

However, there are some problems using underfloor heating in low energy houses. The consumption is so low that the floors are often cold because there is no need for any heat supply. Therefore, the comfort-related benefit by having a warm floor is lost. On the contrary, a concrete floor with, for instance, quarry tiles, is a dubious pleasure when it's cold to walk on. In addition, underfloor heating systems respond rather slowly because of the concrete, into which the underfloor heating is embedded, and will therefore often be in opposite phase, for instance compared to the heating resulting from the sunlight. This means that often there will be some degree of overheating during sunlight as the floor will give off heat for many hours after the heat supply for the underfloor heating hoses has been switched off. Conversely, it will then take corresponding long time before the room is heated up when needed. Lightweight construction buildings (without any large heat capacity) merely amplify this problem.

Convectors with forced convection exist, but they typically operate by means of integrated electrically driven fans. These convectors are relatively expensive to manufacture, consume power and often need a complex control system.

DE 198 55 497 A1 discloses an underfloor air convector with a flow duct, a heat exchanger and an outlet controlled by a control flap in the flow duct.

EP 1 965 143 A1 discloses a device for introducing outside air to a radiator through guide vanes in-line with the direction of flow through the radiator

Each of the documents above discloses an air injection fixture according to the preamble of claim 1.

### Brief description of the invention

The present invention relates to an air injection fixture with a built-in heat convector, wherein supply air reaches the heat convector through an air distribution plate for ensuring a uniform air distribution through the heat convector before leaving the fixture to the surrounding room
According to the invention there is proposed an air injection fixtures comprising the features of claim 1. Preferred embodiments of the invention are defined in the dependent claims.

A number of advantages are obtained by combining an air injection fixture, which is often needed anyway, with a heat convector. A very effective heat source with approximately 3-4 times the effect of an ordinary radiator is achieved. Because of its efficiency, this heat source is able to operate at a set temperature as low as the ones usually used for underfloor heating systems. This means that the system may be operated at the preferred relatively low temperatures.

In an embodiment of the invention, the fixture is operated with forced convection driven by the supply air coming from a ventilation system.

Using forced convection results in a heat fixture, which reacts very fast. This makes the invention an obvious choice for low-energy houses with small heat consumption, which are built in light material with only a limited ability of heat storage, where a fast regulation of the heat supply is therefore needed.

In an embodiment of the invention, the fixture is arranged so that the heat convector may be connected to a heat source or a cold source.

In this way, the fixture can be used for both heating and cooling.

According to the invention, the air distribution plate is adjustable. In an embodiment of the invention, the air distribution plate is modular.

In an embodiment of the invention, the air distribution plate is multi-flexible. Making the air distribution plate adjustable, modular and/or multi-flexible allows for the same type of air distribution plates for different embodiments of the air injection fixture.

In an embodiment of the invention, the air distribution plate is made of a thin metal or plastic sheet.

Using a thin metal or plastic sheet for the air distribution plate is advantageous in that it is relative inexpensive and very easy to process.

According to the invention, U-shaped cut-outs are made along the air distribution plate forming slats, which can be individually opened more or less.

In an embodiment of the invention, the U-shaped cut-outs are made along the entire air distribution plate.

Using U-shaped cut-outs to form slats allows for a very flexible adjustability of the air distribution plate.

In an embodiment of the invention, the air distribution plate is made of a die-cut steel or plastic strip.

Using a die-cut steel or plastic strip allows for making air distribution plates "by the meter" and then simply cut the strip into the lengths needed.

In an embodiment of the invention, the air distribution plate is adaptable to all types and positions of connections for supply air hoses.

This allows for using different types and sizes of hose connections and for placing the connections at different positions on the box into which the air injection fixture is arranged, such as at the end of the box or along the side of the box.

In an embodiment of the invention, the fixture further comprises an industrial mesh placed along the air distribution plate so that the supply air must pass through the industrial mesh before passing through the air distribution plate.

Placing an industrial mesh in front of the air distribution plate further improves the equal distribution of the air flow through the air distribution plate and, thereby, through the heat convector.

In an embodiment of the invention, the fixture is made of a metal and/or a plastic material.

Such materials are relative inexpensive and very easy to process.

### Figures

In the following, a few exemplary embodiments of the invention will be described in more detail with reference to the figures, in which
- fig. 1: illustrates a principle sketch of the invention,
- fig. 2: shows an exploded view of an air injection fixture according to an embodiment of the invention,
- fig. 3: shows an exploded view of an air injection fixture according to another embodiment of the invention,
- fig. 4: illustrates a cross-sectional view of the air injection fixture shown in fig. 3,
- figs. 5a-5c: illustrate details of an air distribution plate according to an embodiment of the invention,
- fig. 6a: illustrates a configuration of the slats of an air distribution plate according to an embodiment of the invention, and
- fig. 6b: illustrates a configuration of the slats of an air distribution plate according to another embodiment of the invention.

### Detailed description of the invention

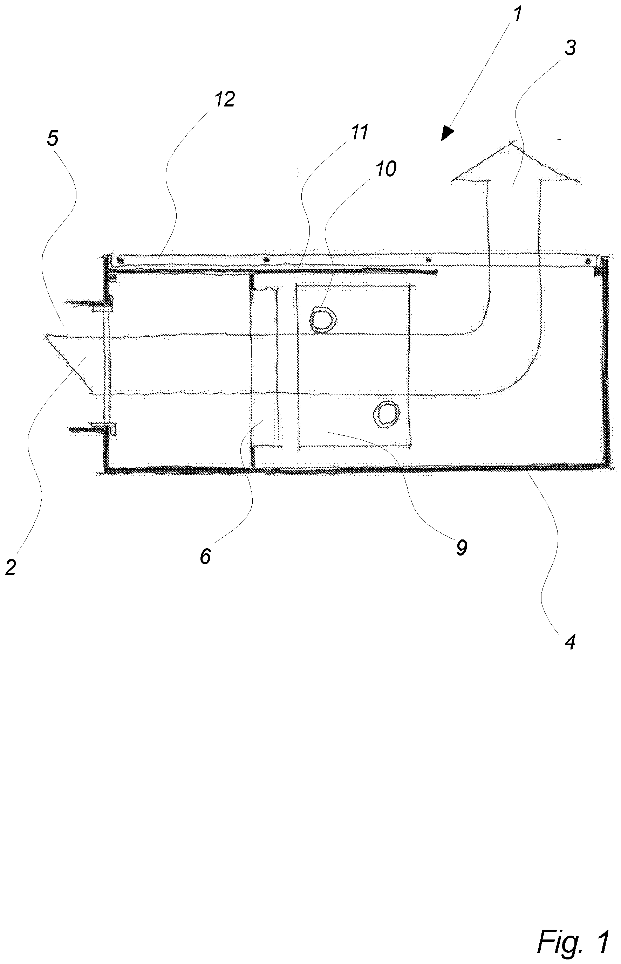

Fig. 1 illustrates the working principle of the air injection fixture 1, in which supplied air 2 passes through an air distribution plate 6 for ensuring an equal distribution of the air 2 through a heat convector 9. After having been heated or cooled by the heat convector 9, the air 3 leaves the air injection fixture 1 and continues into the surrounding room.

The air injection fixture 1 works by blowing supply air 2 from a ventilation system of the house through a heat convector 9 having a large surface. Through forced convection, a high efficiency is obtained, which makes it possible to meet the relatively limited need for heat in a low-energy house, even with a low set temperature.

As mentioned, it will, at least to a certain extent, be possible to use the fixture 1 for cooling by reversing the circulation of liquid through the heat convector 9 so that heat energy is delivered in a heat storage (not shown) instead of being taken therefrom. Alternatively, the pipe connections 10 may be switched to additional heat storages (not shown) for accumulating the heat energy given off by the passing air, for instance for pre-heating water for domestic use.

The supply of heat or cold to the heat convector 9 may be controlled by means of a simple wireless remote control (not shown), which can be arranged at a representative position in the room, in which the temperature is to be controlled. The forced convection results in a very fast reaction when it comes to regulation of the temperature.

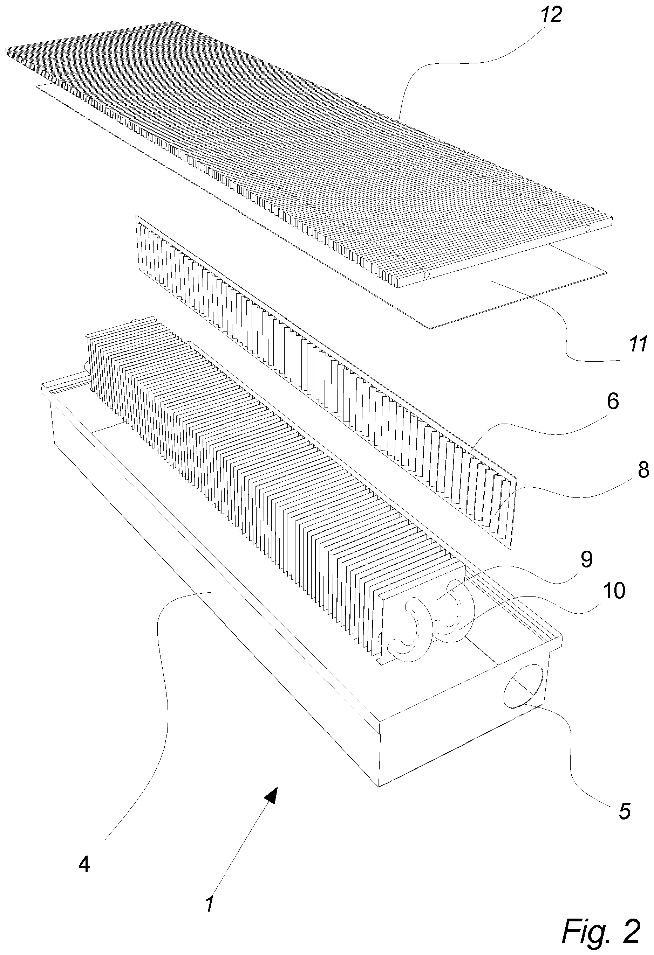

Fig. 2 shows an exploded view of an air injection fixture 1 according to an embodiment of the invention. In the illustrated embodiment, the air injection fixture 1 is built into a box 4 at one end of which is placed an aperture 5 to which a supply air hose (not shown) may be connected.

A heat convector 9 with pipe connections 10 for conducting a warm or cold liquid through the heat convector 9 is arranged in the box 4. An air distribution plate 6 with a plurality of more or less opened slats 8 is arranged along the heat convector 9 separating the heat convector 9 from the part of the box 4 into which the supply air is led. A lid 11 is arranged over this part of the box 4 and the heat convector 9 so that the air entering the air injection fixture 1 through the aperture 5 is forced to pass through the air distribution plate 6 and the heat convector 9.

Whereas the lid 11 does not extend in the full width of the box 4, leaving an upward facing opening along one side of the box 4 for the heated or cooled air to leave the box 4 again, a grate 12 extending in the full width of the box 4 is arranged over the lid, so that the air leaving the box 4 passes through this grate 12.

The box 4 enclosing the fixture may, for instance, be made from a metal or it may be moulded in a plastic material.

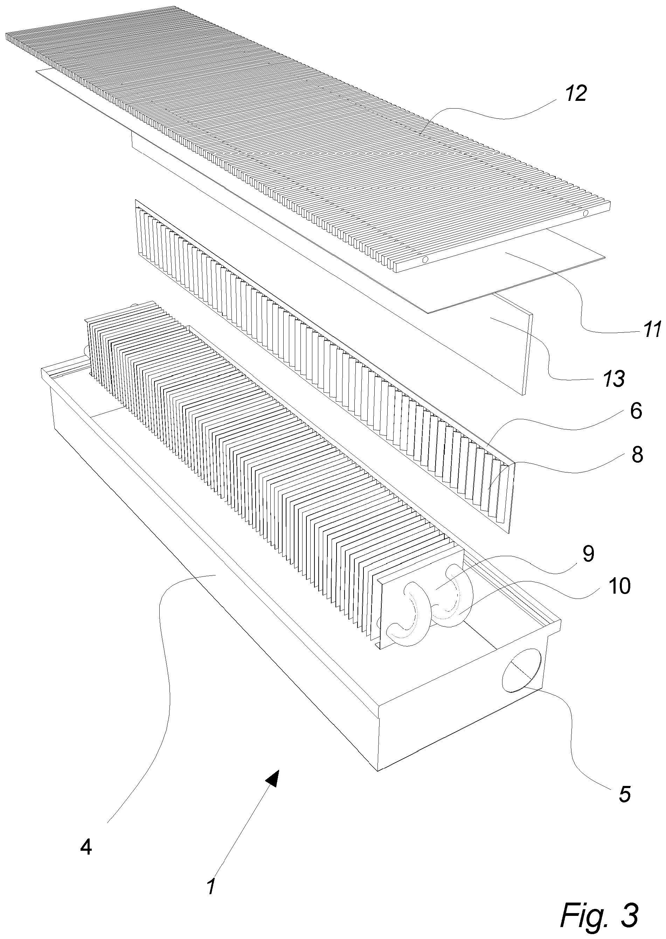

Fig. 3 shows an exploded view of an air injection fixture 1 according to another embodiment of the invention. This embodiment is very similar to the one shown in fig. 2, the only difference being the addition of an industrial mesh 13 placed along the air input side of the air distribution plate 6 in such a way that the supply air must pass through the industrial mesh 13 before passing through the air distribution plate 6.

In this position, the industrial mesh 13 works as a turbulence net removing any laminar flow of the supply air, which causes the distribution of air along the heat convector 9 to be even more equal than without the industrial mesh 13.

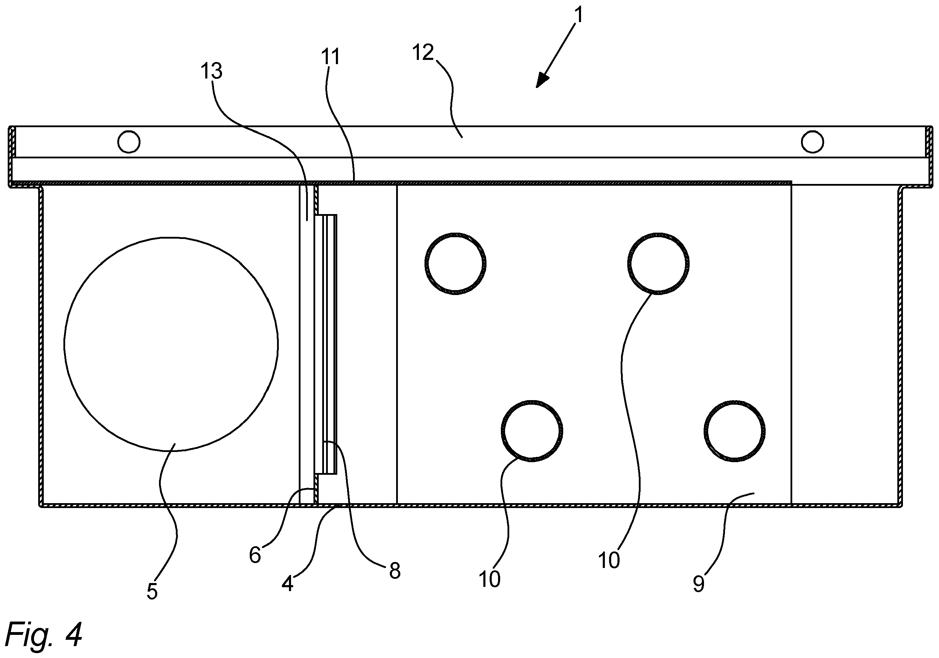

Fig. 4 illustrates a cross-sectional view of the air injection fixture 1 shown in fig. 3, the cross-section being seen from the end of the air injection fixture 1 pointing away from the viewer in fig. 3.

This figure shows how an aperture 5 for connection of a supply air hose (not shown) is placed at one end of the box 4 in one side thereof. The supply air 2 enters the box 4 in the longitudinal direction thereof into a chamber, which is defined by some of the walls of the box 4, by the lid 11 and by the industrial mesh 13. From there, the air is forced through the industrial mesh 13 and the air distribution plate 6 placed just behind it before it reaches the heat convector 9, through which flows either a heating or a cooling liquid in the pipe connections 10. After having been heated or cooled by the heat convector 6, the air 3 passes by the edge of the lid 11 and leaves the air injection fixture 1 through the grate 12 at the opposite side of the box 4 as compared to where it entered.

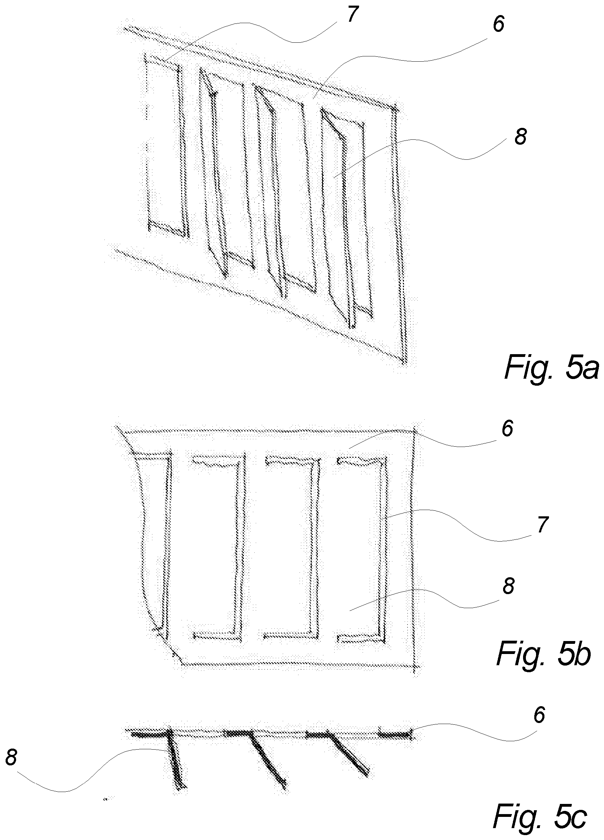

Figs. 5a-5c illustrate details of an air distribution plate 6 according to an embodiment of the invention.

Fig. 5a shows in a perspective view, how the air distribution plate 5 may be made from a thin metal or plastic sheet, along which a plurality of U-shaped cut-outs 7 are made forming slats 8, which can be individually opened more or less.

The air distribution plate 8 may be made from a die-cut steel or plastic strip so that it can be shortened to the desired length depending on the length of the air injection fixture 1 into which it is to be fitted.

Fig. 5b shows a front view of the same air distribution plate 8 with a clear indication of the series of U-shaped cut-outs 7 forming the slats 8.

Fig. 5c is a side view of the air distribution plate 6 showing clearly how the slats 8 may be individually opened more or less.

This option may be used for adjusting the air distribution plate 8 to an optimized configuration for different types, sizes and positions of connections 5 for supply air hoses. In order to obtain the most equal distribution of the air, the slats 8 near the connections 5 should be less open than the slats 8 further away therefrom.

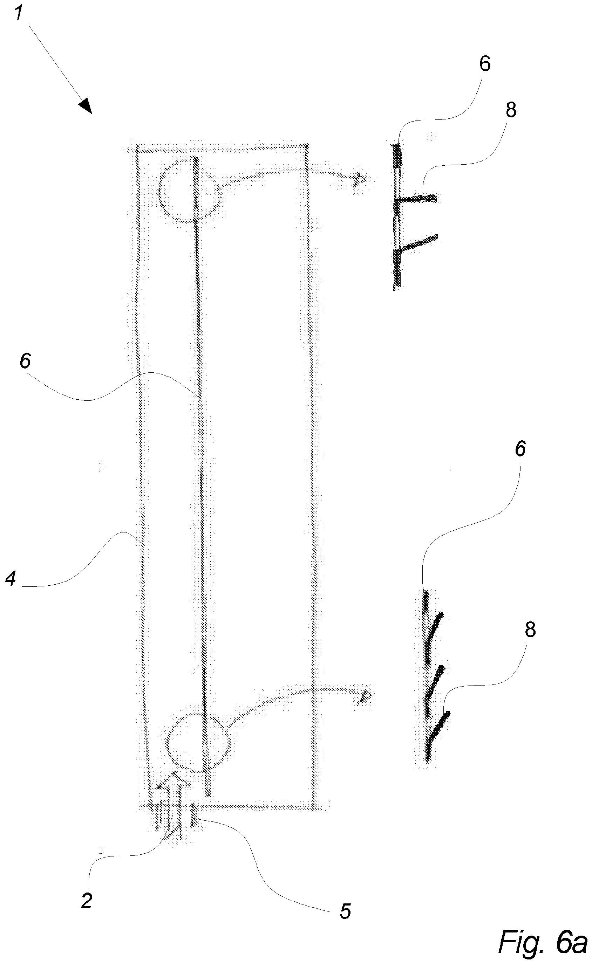

Fig. 6a illustrates a configuration of the slats 8 of an air distribution plate 6 for an embodiment of the air injection fixture 1, where a connection 5 for a supply air hose is placed at the end of the box 4 as has been the case for the embodiments illustrated in the previous figures. In this case, all the slats 8 open in the same direction, but the slats 8 at the end of the air distribution plate 6 nearest the connection 5 are only slightly opened, whereas the slats 8 at the other end of the air distribution plate 6 are almost completely opened.

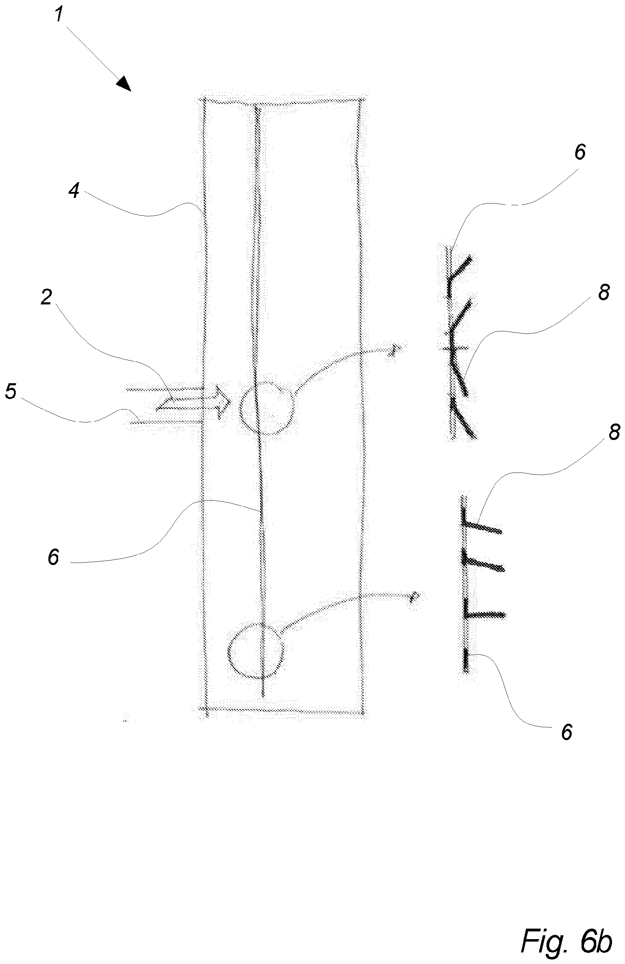

Fig. 6b illustrates a configuration of the slats 8 of an air distribution plate 6 for another embodiment of the air injection fixture 1, where a connection 5 for a supply air hose is placed centrally on one side of the box 4. In this case, the slats 8 on one side of the connection 5 open in one direction, whereas the slats 8 on the other side of the connection 5 open in the opposite direction, meaning that the orientation of the U-shaped cut-outs 7 must be reversed at this position on the air distribution plate 6. Like before, the slats 8 nearest the connection 5, i.e. at the centre of the air distribution plate 6, are only slightly opened, whereas the slats 8 furthest away from the connection 5, i.e. at the ends of the air distribution plate 6, are almost completely opened.

### List of reference numbers

1. Air injection fixture
2. Supply air from ventilation system
3. Heated/cooled air
4. Box
5. Connection for supply air hose
6. Air distribution plate
7. Die-cut in air distribution plate
8. Slat in air distribution plate
9. Heat convector
10. Pipe connection to/through the heat convector
11. Lid
12. Grate
13. Industrial mesh

## Claims

1. An air injection fixture (1) with a built-in heat convector (9), wherein supply air (2) reaches the heat convector through an air distribution plate (6) for ensuring a uniform air distribution through the heat convector before leaving the fixture to the surrounding room, **characterized in that** the air distribution plate is adjustable, and wherein U-shaped cut-outs are made along the air distribution plate forming slats (8), which can be individually opened more or less.

2. The air injection fixture according to claim 1, wherein the fixture is arranged to be operated with forced convection driven by the supply air coming from a ventilation system.

3. The air injection fixture according to claim 2, wherein the fixture is arranged so that the heat convector may be connected to a heat source or a cold source.

4. The air injection fixture according to claim 1, wherein the air distribution plate is modular.

5. The air injection fixture according to claim 1 or 4, wherein the air distribution plate is made of a thin metal or plastic sheet.

6. The air injection fixture according to claim 1, wherein the U-shaped cut-outs are made along the entire air distribution plate.

7. The air injection fixture according to any of claims 1 or 4-6, wherein the air distribution plate is made of a die-cut steel or plastic strip (7).

8. The air injection fixture according to any of the preceding claims, further comprising an industrial mesh (13) placed along the air distribution plate so that the supply air must pass through the industrial mesh before passing through the air distribution plate.

9. The air injection fixture according to any of the preceding claims, wherein the fixture is made of a metal and/or a plastic material.

## Patentansprüche

1. Lufteinblasvorrichtung (1) mit einem eingebauten Wärmekonvektor (9), wobei Zufuhrluft (2) den Wärmekonvektor durch eine Luftverteilungsplatte (6) erreicht zum Sicherstellen einer gleichmäßigen Luftverteilung durch den Wärmekonvektor ehe sie aus der Vorrichtung in den umgebenden Raum austritt, **dadurch gekennzeichnet, dass** die Luftverteilungsplatte verstellbar ist, und wobei U-förmige Aussparungen entlang der Luftverteilungsplatte vorgesehen sind und Lamellen (8) bilden, die einzeln mehr oder weniger geöffnet werden können.

2. Lufteinblasvorrichtung nach Anspruch 1, wobei die Vorrichtung dafür eingerichtet ist, mit Zwangskonvektion betrieben zu werden, welche durch die Zufuhrluft von einem Belüftungssystem getrieben wird.

3. Lufteinblasvorrichtung nach Anspruch 2, wobei die Vorrichtung so angeordnet ist, dass der Wärmekonvektor mit einer Wärmequelle oder einer Kältequelle verbunden werden kann.

4. Lufteinblasvorrichtung nach Anspruch 1, wobei die Luftverteilungsplatte modular ist.

5. Lufteinblasvorrichtung nach Anspruch 1 oder 4, wobei die Luftverteilungsplatte aus einem dünnen Metall- oder Kunststoffbogen hergestellt ist.

6. Lufteinblasvorrichtung nach Anspruch 1, wobei die U-förmigen Aussparungen entlang der ganzen Luftverteilungsplatte vorgesehen sind.

7. Lufteinblasvorrichtung nach einem der Ansprüche 1 oder 4-6, wobei die Luftverteilungsplatte aus einem ausgestanzten Stahl- oder Kunststoffband (7) hergestellt ist.

8. Lufteinblasvorrichtung nach einem der vorgehenden Ansprüche, weiter umfassend ein industrielles Netz (13), das entlang der Luftverteilungsplatte angeordnet ist, so dass die Zufuhrluft durch industrielle Netz passieren muss ehe sie durch die Luftverteilungsplatte passiert.

9. Lufteinblasvorrichtung nach einem der vorgehenden Ansprüche, wobei die Vorrichtung aus einem Metall- und/oder Kunststoffmaterial hergestellt ist.

## Revendications

1. Dispositif de fixation d'injection d'air (1) avec un convecteur de chaleur intégré (9), dans lequel de l'air d'alimentation (2) atteint le convecteur de chaleur à travers une plaque de distribution d'air (6) pour assurer une distribution d'air uniforme à travers le convecteur de chaleur avant de quitter le dispositif de fixation dans la pièce environnante, **caractérisé en ce que** la plaque de distribution d'air est réglable, et dans lequel des découpes en forme de U sont réalisées le long des lattes de formation de plaque de distribution d'air (8) qui peuvent être ouvertes individuellement plus ou moins.

2. Dispositif de fixation d'injection d'air selon la revendication 1, dans lequel le dispositif de fixation est agencé pour être actionné avec une convection forcée entraînée par l'air d'alimentation provenant d'un système de ventilation.

3. Dispositif de fixation d'injection d'air selon la revendication 2, dans lequel le dispositif de fixation est agencé de telle sorte que le convecteur de chaleur peut être connecté à une source de chaleur ou à une source froide.

4. Dispositif de fixation d'injection d'air selon la revendication 1, dans lequel la plaque de distribution d'air est modulaire.

5. Dispositif de fixation d'injection d'air selon la revendication 1 ou 4, dans lequel la plaque de distribution d'air est constituée d'une fine feuille de métal ou de plastique.

6. Dispositif de fixation d'injection d'air selon la revendication 1, dans lequel les découpes en forme de U sont réalisées le long de toute la plaque de distribution d'air.

7. Dispositif de fixation d'injection d'air selon l'une quelconque des revendications 1 ou 4 à 6, dans lequel la plaque de distribution d'air est constituée d'une bande en acier ou en plastique découpée à l'emporte-pièce (7).

8. Dispositif de fixation d'injection d'air selon l'une quelconque des revendications précédentes, comprenant en outre un treillis industriel (13) placé le long de la plaque de distribution d'air si bien que l'air d'alimentation doit passer à travers le treillis industriel avant de passer à travers la plaque de distribution d'air.

9. Dispositif de fixation d'injection d'air selon l'une quelconque des revendications précédentes, dans lequel le dispositif de fixation est fait d'un métal et / ou d'une matière plastique.
